(19) **Europäisches Patentamt**

**European Patent Office**

**Office européen des brevets**

(11) Veröffentlichungsnummer: **0 048 352**
**B1**

(12) # EUROPÄISCHE PATENTSCHRIFT

(45) Veröffentlichungstag der Patentschrift:
16.05.84

(51) Int. Cl.³: **G 06 F 7/50**

(21) Anmeldenummer: **81106668.7**

(22) Anmeldetag: **27.08.81**

(54) **Binärer MOS-Switched-Carry-Paralleladdierer.**

(30) Priorität: **20.09.80 DE 3035631**

(43) Veröffentlichungstag der Anmeldung:
**31.03.82 Patentblatt 82/13**

(45) Bekanntmachung des Hinweises auf die Patenterteilung:
**16.05.84 Patentblatt 84/20**

(84) Benannte Vertragsstaaten:
**DE FR GB IT NL**

(56) Entgegenhaltungen:
**DE - A - 2 647 982**
**FR - A - 2 053 444**
**US - A - 3 602 705**
**US - A - 3 767 906**
**US - A - 3 932 734**
**US - A - 4 152 775**

**NATIONAL TECHNICAL REPORT, Band 22, Nr. 5, Oktober 1976, Osaka, JP KYOGOKU et al. "CMOS high-speed full-adder for micro-processors" Seiten 601-606**

(73) Patentinhaber: **Deutsche ITT Industries GmbH, Hans-Bunte-Strasse 19 Postfach 840, D-7800 Freiburg (DE)**

(84) Benannte Vertragsstaaten: **DE**

(73) Patentinhaber: **ITT INDUSTRIES INC., 320 Park Avenue, New York, NY 10022 (US)**

(84) Benannte Vertragsstaaten: **FR GB IT NL**

(72) Erfinder: **Uhlenhoff, Arnold, Dipl.-Ing., Hölderlinstrasse 33, D-7830 Emmendingen (DE)**

(74) Vertreter: **Stutzer, Gerhard, Dr., Deutsche ITT Industries GmbH Patent- und Lizenzabteilung Hans-Bunte-Strasse 19 Postfach 840, D-7800 Freiburg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Binärer MOS-Switched-Carry-Paralleladdierer

Die Erfindung betrifft binäre MOS-Switched-Carry-Paralleladdierer entsprechend dem Oberbegriff des Patentanspruchs.

In dem Buch von A. Shah et al »Integrierte Schaltungen in digitalen Systemen«, Band 2, Basel 1977, Seiten 85 bis 109, insbesondere Seiten 103 bis 105 sind Parallel-Addierer mit geschaltetem Übertrag (switched carry) beschrieben. Für den elektronischen Umschalter, der die Übertragssignale der einzelnen Stufen von Stufe zu Stufe in Abhängigkeit von den beiden Ausgangssignalen des die Stellensignale verknüpfenden Halbaddierers weiterschaltet, ist lediglich eine Realisierung mittels Bipolar-Transistoren angegeben, die aus drei solchen Transistoren, einer Diode und drei ohmschen Widerständen besteht. Zur Realisierung der Halbaddierer, die lediglich in Blockschaltbildform angegeben sind, werden auf den Seiten 87 bis 103 a. a. O. Hinweise auf im Handel befindliche integrierte Bipolarschaltungen gegeben.

Eine direkte Übertragung der anhand der erwähnten integrierten Bipolarschaltungen erläuterten Grundprinzipien der bekannten Paralleladdierer auf mittels Isolierschicht-Feldeffekttransistoren zu integrierte Schaltungen, also auf die sogenannten MOS-Schaltungen, ist nicht ohne weiteres möglich, da die MOS-Schaltungstechnik zum Teil erheblich von der Bipolar-Schaltungstechnik abweicht. Es ist daher die Aufgabe der Erfindung, ausgehend von dem eingangs erwähnten Stand der Technik, einen nach dem Prinzip des geschalteten Übertrags (Switched Carry) arbeitenden Paralleladdierer zur Realisierung in MOS-Technik anzugeben.

Dabei soll die Bildung des Übertragsignals jeder Stufe mit der in der MOS-Technik größtmöglichen Schaltgeschwindigkeit erfolgen, d. h., im Signalweg für das Übertragsignal darf nicht mehr als höchstens ein Verknüpfungsglied pro Stufe angeordnet sein. Ferner soll der Schaltungsaufwand pro Stufe möglichst gering sein, so daß die auf dem Halbleiterkörper der integrierten Schaltung zur Verfügung stehende Fläche aufgrund der geringen Zellenfläche einer Paralleladdiererstufe möglichst optimal ausgenutzt werden kann.

Aus der US-Patentschrift 36 02 705 ist zwar bereits eine mittels MOS-Transistoren realisierte Stufe eines Switched-carry-Volladdierers bekannt, diese benutzt jedoch einzelne Transistoren als Verknüpfungselemente, wobei deren gesteuerte Strompfade zum Teil in Serie liegen können. Die Schaltung enthält keine speziellen Lastelemente. Dadurch ergibt sich jedoch der wesentliche Nachteil, daß die Pegel der an den einzelnen Schaltungsknoten auftretenden Digitalsignale abnehmen, je mehr Transistoren in Serie liegen. Insbesondere, wenn mehrere der bekannten Volladdiererstufen zu einem Paralleladdierer zusammengeschaltet werden, reichen die Signalpegel nicht mehr aus, um eindeutig zwischen einem der logischen Eins zugeordneten und einem der logischen Null zugeordneten Pegel mit dem erforderlichen Störabstand unterscheiden zu können.

Aus »National Technical Report«, Bd. 22, Nr. 5, Okt. 1976, S. 604, Fig. 8a, ist es bekannt, im Carry-übertragungsweg einer Addierstufe einen Inverter zu verwenden.

Die Erfindung wird nun anhand der Figuren der Zeichnung näher erläutert. Die

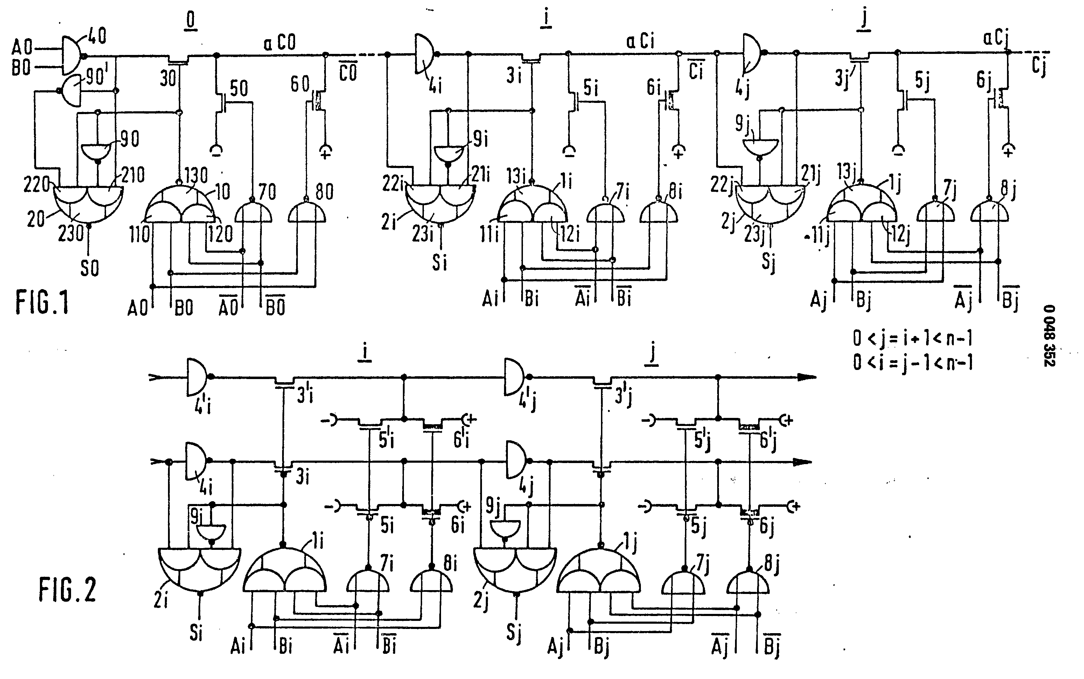

Fig. 1 und 2 zeigen zusammen das Schaltbild eines Ausführungsbeispiels der Erfindung, wobei von den n Stufen die Stufe 0, die die Stellensignale mit der niedersten Wertigkeit $2^0$ verarbeitet, sowie die aufeinanderfolgenden Stufen i, j gezeigt sind.

Für das Ausführungsbeispiel ist vorausgesetzt, daß die Binärsignale in positiver Logik verarbeitet werden.

In den Figuren ist ferner die Darstellung mittels der Schaltsymbole für Verknüpfungsglieder so gewählt, daß nur solche Verknüpfungsglieder einen Arbeitswiderstand aufweisen, deren Ausgangsleitung am Berührungspunkt mit dem Halbkreis des Verknüpfungssymbols den zur Darstellung einer Invertierung üblichen Punkt aufweisen. Aus diesem Grund wird für die Zwecke der vorliegenden Beschreibung auch zwischen einem Verknüpfungsglied, das eine derartige Schaltung mit einem einzigen Arbeitswiderstand ist, und einer Verknüpfung als solcher unterschieden, die lediglich Teil eines Verknüpfungsglieds ist.

In Fig. 1 enthält die Stufe j das erste und das zweite Antivalenzglied 1j, 2j. Sie bestehen jeweils aus der ersten und der zweiten UND-Verknüpfung 11j, 12j bzw. 21j, 22j sowie der jeweiligen NOR-Verknüpfung 13j, 23j. In gleicher Weise sind auch das erste und das zweite Antivalenzglied 1i, 2i bzw. 10, 20 der Stufe i und der Stufe 0 ausgebildet; die entsprechenden ersten UND-Verknüpfungen haben die Bezugszeichen 11i, 21i, 110, 210, die jeweiligen zweiten UND-Verknüpfungen die Bezugszeichen 12i, 22i, 120, 220 und die NOR-Verknüpfungen die Bezugszeichen 13i, 23i, 130, 230.

In der Stufe j ist ferner das erste NOR-Glied 7j und das zweite NOR-Glied 8j vorgesehen. Beide NOR-Glieder sind auch in der Stufe i und der Stufe 0 als NOR-Glieder 7i, 8i bzw. 70, 80 vorgesehen.

Den beiden Eingängen der ersten UND-Verknüpfung 11j des ersten Antivalenz-Glieds und den beiden Eingängen des ersten NOR-Glieds 7j sind die Stellensignale Aj, Bj und den beiden Eingängen der zweiten UND-Verknüpfung 12j des ersten Antivalenz-Glieds 1j sowie den beiden Eingängen des zweiten NOR-Glieds 8j die inversen Stellensignale Āj, B̄j zugeführt. Diese Stellensignale haben in der Stufe j die Wertigkeit $2^j$.

In der Stufe j ist ferner der Transistor 3j vorgesehen, der als Ein-Aus-Schalter den elektronischen Umschalter nach dem Stand der Technik bei der Übertragsbildung ersetzt. Der Transistor $3j$ ist mit seinem gesteuerten Strompfad zwischen den Ausgang eines dem Übertragsausgang $aCi$ der nächstniederen Stufe $i$ nachgeschalteten Inverters $4j$ und den eigenen Übertragsausgang $aCj$ der Stufe $j$ geschaltet. Die Gate-Elektrode des Transistors $3j$ ist mit dem Ausgang des ersten Antivalenz-Glieds $1j$ verbunden. Dieser Ausgang liegt auch über den Inverter $9j$ am einen der beiden Eingänge der zweiten UND-Verknüpfung $22j$ des zweiten Antivalenz-Glieds $2j$, während sein anderer Eingang mit dem Eingang des Inverters $4j$ verbunden ist. Die beiden Eingänge der ersten UND-Verknüpfung $21j$ des zweiten Antivalenz-Glieds $2j$ liegen am Ausgang des ersten Antivalenz-Glieds $1j$ bzw. am Ausgang des Inverters $4j$.

Der Übertragsausgang $aCj$ der Stufe $j$ ist schließlich über den gesteuerten Strompfad des ersten Schaltertransistors $5j$ mit dem Minuspol der Betriebsspannungsquelle — in den Fig. 1 und 2 sind N-Kanal-Transistoren vorausgesetzt — und über den zweiten Schaltertransistor $6j$ vom Verarmungstyp mit dem Pluspol der Betriebsspannungsquelle verbunden. Das Gate des ersten Schaltertransistors $5j$ liegt am Ausgang des ersten NOR-Glieds $7j$ und das des zweiten Schaltertransistors $6j$ am Ausgang des zweiten NOR-Glieds $8j$. Am Übertragsausgang $aCj$ ist das Übertragssignal $Cj$ und am Ausgang des zweiten Antivalenz-Glieds das Summensignal $Sj$ abzunehmen.

Die zur Stufe $j$ nächstniedere Stufe $i$ ist von den Verknüpfungsgliedern her und deren Anordnung sowie von den weiteren Bauelementen her gleichartig aufgebaut, jedoch ergibt sich gegenüber der Stufe $j$ eine geringfügig andere Ansteuerung mit den Stellensignalen $Ai$, $Bi$, $\overline{Ai}$, $\overline{Bi}$ sowie eine andere Zuordnung des Inverters $9i$. Dies ist darauf zurückzuführen, daß aufgrund des zwischen den Übertragsausgängen $aCi$, $aCj$ zweier Stufen angeordneten Inverters $4j$ bei entsprechender Durchschaltung des Transistors $3j$ und $+$er Schaltertransistoren $5j$, $6j$ das am Eingang des Inverters $4j$ liegende Übertragssignal der nächstniederen Stufe invertiert zum Übertragsausgang $aCj$ übertragen wird. Diese Eigenschaft ist daher bei der Ansteuerung der einzelnen Verknüpfungsglieder innerhalb der nächstniederen Stufe $i$ zu berücksichtigen. In Fig. 1 ist vorausgesetzt, daß das Übertragssignal $Cj$ in nichtinvertierter Form auftritt; dann tritt aber das Übertragssignal der nächstniederen Stufe $i$ in seiner invertierten Form $\overline{Ci}$ auf.

In der Stufe $i$ sind also die Stellensignale $Ai$, $Bi$ nicht den beiden Eingängen des ersten NOR-Glieds $7i$ — wie in der Stufe $j$ den beiden Eingängen des ersten NOR-Glieds $7j$ —, sondern den beiden Eingängen des zweiten NOR-Glieds $8i$ zugeführt. Ebenso ist in der Stufe $i$ das Ausgangssignal des ersten Antivalenzglieds $1i$ direkt nicht einem der Eingänge der ersten UND-Verknüpfung und, über den Inverter $9i$ invertiert, einem der Eingänge der zweiten UND-Verknüpfung des zweiten Antivalenzglieds $2i$ zugeführt — wie in der Stufe $j$, vgl. Fig. 1 —, sondern direkt einem der Eingänge der zweiten UND-Verknüpfung $22i$ und, über den Inverter $9i$ invertiert, einem der Eingänge der ersten UND-Verknüpfung $21i$. Am Eingang des Inverters $4i$ ist daher eine solche vorausgehende Stufe anzuschließen, an deren Ausgang ein nichtinvertiertes Übertragssignal entsteht, also eine, die in ihrem Aufbau der Stufe $j$ entpricht.

Für die Funktionserläuterung ist an die Voraussetzung zu erinnern, daß in positiver Logik gearbeitet werden soll, d. h. daß den positiveren Pegel H die logische Eins zugeordnet sein soll und dementsprechend dem negativeren Pegel L die logische Null. Am jeweiligen Übertragsausgang $aCj$ soll daher nur dann und nur dann ein H-Pegel auftreten, wenn entweder am nächstniederen Übertragsausgang $aCi$ ein L-Pegel und zugleich eines der beiden Stellensignale $Aj$, $Bj$ einen H-Pegel aufweist oder wenn bei einem H-Pegel am Eingang des Inverters $4j$ und in beiden Stellensignalen $Aj$, $Bj$ ein H-Pegel auftritt.

Dabei bewirkt der Transistor $3j$, daß dieser H-Pegel in den angegebenen Fällen auch zum Übertragsausgang $aCj$ durchgeschaltet wird. Da dieses Durchschalten aber auch bei Eingangssignal-Kombinationen auftritt, bei denen ein Übertragsignal verboten ist, wird mittels des ersten Schaltertransistors $5j$ erreicht, daß in diesen Fällen der Übertragsausgang $aCj$ dadurch auf den L-Pegel geklemmt wird, daß der erste Schaltertransistor $5j$ vom Ausgangssignal des ersten NOR-Glieds $7j$ leitend gesteuert wird.

In den Fällen, in denen beide Stellensignale $Aj$, $Bj$ einen H-Pegel haben und somit allein schon aus dieser Bedingung ein H-Pegel des Übertragsignals $Cj$ resultiert, wird mittels des zweiten NOR-Glieds $8j$ unabhängig von den Vorgängen in der restlichen Schaltung der Stufe $j$ erreicht, daß der zweite Schaltertransistor $6j$ vom Ausgangssignal des zweiten NOR-Glieds $8j$ sofort leitend gesteuert wird und somit der H-Pegel sofort am Übertragsausgang $aCj$ auftritt. Dies ist vor allem bei höherwertigen Stellensignalen, insbesondere jedoch beim höchstwertigen Stellensignal von Bedeutung, da bei jeweils einer Eins in der höchsten Stelle der beiden Binärzahlen der dann zwangsläufig auftretende Übertrag lediglich mit einer Verzögerung erscheint, die der Gatterlaufzeit des zweiten ODER-Glieds entspricht.

Von besonderer Bedeutung für die Erfindung ist auch der Inverter $4j$, der bei vielstelligen Binärzahlen unerläßlich ist, da ohne ihn schon nach wenigen Stufen das aus einer unteren Stufe kommende Übertragsignal in einer oberen Stufe soviel an Amplitude verloren hätte, daß eine sichere Pegelerkennung nicht mehr möglich wäre. Im Signalweg für das Übertragsignal tritt somit pro Stufe ebenfalls nur die Gatterlaufzeit eines Gatters, nämlich des Inverters $4j$, und die Schaltverzögerung des Transistors $3j$ auf.

Die niederste Stufe 0 ist, da sie von einer vorhergehenden Stufe voraussetzungsgemäß kein Übertragssignal zu verarbeiten hat, hinsichtlich des Inverters 4j der übrigen Stufen geringfügig modifiziert, und zwar ist anstelle dieses Inverters das NAND-Glied 40 vorgesehen, dem die nicht-invertierten Stellensignale A0, B0 zugeführt sind. Im Ausführungsbeispiel der Fig. 1 ist die Stufe 0 ebenfalls eine Stufe, die am Übertragsausgang aC0 das invertierte Übertragsignal $\overline{C0}$ abgibt. Die Komponenten der Stufe 0 haben entsprechend den Indizes i, j in den Stufen i, j als letzte Ziffer die Ziffer 0, d. h. es sind der Transistor 30, der erste Schaltertransistor 50, der zweite Schaltertransistor 60 vom Verarmungstyp, das erste Antivalenzglied 10, das zweite Antivalenzglied 20, das erste NOR-Glied 70, das erste NOR-Glied 80 und der Inverter 90 vorhanden. Schließlich ist noch der weitere Inverter 90' vorgesehen, der das Ausgangssignal des NAND-Glieds 40 invertiert dem einen Eingang der zweiten UND-Verknüpfung 22 des zweiten Antivalenzglieds 20 zu-führt.

In Fig. 2 sind zusätzlich die Einzelheiten gezeigt, die bei vielstelligen (n > 5) Paralleladdierern, aus folgendem Grund von Vorteil sind. Wie aus Fig. 1 ersichtlich ist, sind in den einzelnen Stufen 0, i, j die Ausgänge des NAND-Glieds 40 bzw. der Inverter 4i, 4j mit mindestens einem Eingang einer weiteren Stufe kapazitiv belastet. Dies führt zu einem Langsamerwerden der Schaltung nach Fig. 1, was insbesondere bei den erwähnten vielstelligen Paralleladdierern, in denen sich diese Verzögerungszeit aufsummiert, nachteilig ist. Zur Vermeidung dieser kapazitiven Belastung ist daher nach Fig. 2 ein zusätzlicher Serienzweig vorgesehen, der pro Stufe i, j aus dem weiteren Inverter 4'i, 4'j bzw. in der niedersten Stufe 0 aus einem weiteren NAND-Glied und dem weiteren Transistor 3'i, 3'j besteht. Die n Serienzweige der einzelnen Stufen sind im Sinne steigender n in Reihe geschaltet, und in jeder Stufe i, j ist das Gate des weiteren Transistors 3'i, 3'j an das des Transistors 3i, 3j angeschlossen. Ferner ist in jeder Stufe i, j zwischen dem weiteren Transistor 3'i, 3'j und dem Eingang des weiteren Inverters 4'j der nächsthöheren Stufe j ein weiterer erster Schaltertransistor 5'i, 5'j und ein weiterer zweiter Schaltertransistor 6'i, 6'j vom Verarmungstyp gleichsinnig wie der erste und der zweite Schaltertransistor 5i, 6i bzw. 5j, 6j angeordnet. Als Ausgang für das Übertragsignal der höchsten Stufe n — 1 dient das entsprechende Ende der Reihenschaltung der Serienzweige.

Der MOS-Switched-Carry-Paralleladdierer nach der Erfindung kann besonders vorteilhaft in solchen Paralleladdierern angewendet werden, die im sogenannten Mehrschichtaufbau mehrere n stellige Binärzahlen addieren, wobei in der letzten Schicht nur noch zwei Binärzahlen zu addieren sind.

Aufgrund des gewählten Aufbaus der einzelnen Stufen i, j ergibt sich eine optimale Flächen-ausnutzung des Halbleiterkörpers der integrier-ten Schaltung pro Stufe, so daß viele solcher Stufen optimal angeordnet werden können.

## Patentanspruch

Monolithisch mittels Isolierschicht-Feldeffekt-transistoren gleicher Leitungsart (N- oder P-Kanal) vom Anreicherungstyp integrierter n-stufiger Paralleladdierer für zwei im natürlichen Binärcode mit n Stellen, n > 5, dargestellte Zahlen mit Durchschaltung des Übertragsignals (Cj) der j-ten Stelle (j = 0 ... n — 1) mittels eines aus einem Transistor bestehenden Ein-Aus-Schalters als elektronischem Umschalter (3j), dessen gesteuerter Strompfad zwischen den Ausgang seines dem Übertragsausgang (aCi) der nächstniederen Stufe (i) nachgeschalteten Inverters (4j) und den Übertragausgang (aCj) der j-ten Stufe geschaltet ist (binärer MOS-Switched-Carry-Paralleladdierer), der pro Stufe (j)

— ein mit den beiden Stellensignalen (Aj, $\underline{Bj}$) und den dazu inversen Stellensignalen ($\overline{Aj}$, $\overline{Bj}$) eingangsseitig gespeistes erstes Antivalenzglied (Exklusiv-ODER-Glied) (1j), dessen Ausgangssignal den elektronischen Umschalter steuert, und

— ein mit dem Ausgangssignal des ersten Antivalenzglieds (1j) und dem Übertragsignal (Ci) der nächstniederen Stufe (i) eingangsseitig gespeistes zweites Antivalenzglied (2j) enthält, dessen Ausgangssignal das Summensignal (Sj) der j-ten Stufe ist,

— die beiden Antivalenz-Glieder (1j, 2j) jeweils aus einer ersten UND-Verknüpfung (11j, 21j) und einer zweiten UND-Verknüpfung (12j, 22j) bestehen, wobei an den beiden Eingängen der ersten UND-Verknüpfung (11j) des ersten Antivalenzglieds (1j) die beiden entsprechenden Stellensignale (Aj, Bj) und den beiden Eingängen der zweiten UND-Ver-knüpfung (12j) die dazu inversen Stellensi-gnale ($\overline{Aj}$, $\overline{Bj}$) liegen,

— das Gate eines ersten Schaltertransistors (5j) am Ausgang eines ersten NOR-Glieds (7j) und das Gate eines zweiten Schaltertransistors (6j) am Ausgang eines zweiten NOR-Glieds (8j) liegt,

— der Übertragsausgang (aCj) der j-ten Stelle über den gesteuerten Strompfad des ersten Schaltertransistors (5j) am ersten Pol der Betriebsspannungsquelle und über den des zweiten Schaltertransistors (6j) vom Verarmungstyp am zweiten Pol der Betriebsspannungsquelle liegt, wobei der erste Pol bei N-Kanal-Transistoren der mit dem negativeren (—) und bei P-Kanal-Transistoren der mit dem positiveren Potential (+) der beiden Pole ist,

gekennzeichnet durch folgende Merkmale:

— die beiden Antivalenzglieder (1j, 2j) bestehen außerdem jeweils aus einer NOR-Verknüpfung (13j, 23j) von der der eine Eingang mit dem Ausgang der einen und der andere Eingang mit dem Ausgang der anderen UND-Verknüpfung (11j, 12j; 21j, 22j) verbunden ist,

— der Ausgang des ersten Antivalenzglieds (1j) der j-ten Stufe (j) liegt über einen Inverter (9j) an einem der beiden Eingänge der zweiten UND-Verknüpfung (22j) des zweiten Antivalenzglieds (2j), während in der i-ten Stufe (i) der Ausgang des ersten Antivalenzglieds (1i) über einen entsprechenden Inverter (9i) an einem der beiden Eingänge der ersten UND-Verknüpfung (21i) des zweiten Antivalenzglieds (2i) liegt,

— in der niedersten Stufe (0) ist der Übertragseingang durch ein die beiden Stellensignale (A0, B0) verknüpfendes NAND-Glied (40) ersetzt,

— die jeweils beiden Eingänge des ersten NOR-Glieds (7j) und des zweiten NOR-Glieds (8i) der nächstniederen Stufe (i) liegen an den entsprechenden Stellensignalen (Aj, Bj, Ai, Bi), während die jeweils beiden Eingänge des zweiten NOR-Glieds (8j) und des ersten NOR-Glieds (7i) der nächstniederen Stufe (i) mit den entsprechenden inversen Stellensignalen ($\overline{Aj}$, $\overline{Bj}$, $\overline{Ai}$, $\overline{Bi}$) gespeist sind,

— in jeder Stufe (i) ist mindestens ein aus einem weiteren Inverter (4'i) bzw. in der niedersten Stufe (0) aus einem weiteren NAND-Glied und einem weiteren Transistor (3'i) bestehender Serienzweig vorgesehen,

— die n Serienzweige sind im Sinne steigender i in Reihe geschaltet,

— in jeder Stufe (i) ist das Gate des weiteren Transistors (3'i) an das des Transistors (3i) dieser Stufe nachgeschlossen,

— in jeder Stufe (i) sind zwischen dem weiteren Transistor (3'i) und dem Eingang des weiteren Inverters (4'j) der nächsthöheren Stufe (j) ein weiterer erster Schaltertransistor (5'i) und ein weiterer zweiter Schaltertransistor (6'i) vom Verarmungstyp gleichsinnig wie der erste und der zweite Schaltertransistor (5i, 6i) angeordnet, und

— die Reihenschaltung der Serienzweige ist derart, daß als Ausgang für das Übertragsignal ausschließlich das Ende der Reihenschaltung dient.

## Claim

Monolithic integrated n-stage parallel adder using enhancement-mode insulated-gate field-effect transistors of the same conductivity type (N- or P-channel), for two numbers represented in the n-digit pure binary code, n > 5, wherein the carry signal (Cj) of the jth stage (j = 0 ... n − 1) is switched through by means of an ON/OFF switch formed by a transistor and acting as an electronic changeover switch (3j) having its controlled current path connected between the output of an inverter (4j) following the carry output (aCi) of the next lower-order stage (i) and the carry output (aCj) of the jth stage (binary MOS switched-carry parallel adder), and wherein in each stage (j)

— a first EXCLUSIVE-OR block (1j) is provided to which the two digit signal (Aj, Bj) and the inverse digit signals ($\overline{Aj}$, $\overline{Bj}$) are applied and whose output signal controls the electronic changeover switch;

— a second EXCLUSIVE-OR block (2j) is provided to which the output signal of the first EXCLUSIVE-OR block (1j) and the carry signal (Ci) of the next lower-order stage (i) are applied and whose output signal is the sum signal (Sj) of the jth stage;

— each of the two EXCLUSIVE-OR blocks (1j, 2j) consists of a first AND gate (11j, 21j) and a second AND gate (12j, 22j), the two inputs of the first AND gate (11j) of the first EXCLUSIVE-OR block (1j) being fed with the two digit signals (Aj, Bj), and the two inputs of the second AND gate (12j) being fed with the inverse digit signals ($\overline{Aj}$, $\overline{Bj}$);

— the gate of a first switching transistor (5j) is connected on the output of a first NOR block (7j), and the gate of a second switching transistor (6j) is connected to the output of a second NOR block (8), and

— the carry output (aCj) of the jth stage is connected via the controlled current path of the first switching transistor (5j) to the first terminal of the power source and via the controlled current path of the second, depletion-mode switching transistor (6j) to the second terminal of the power source, the first terminal being the terminal at the more negative potential (−) in the case of N-channel transistors, and the terminal at the more positive potential (+) in the case of P-channel transistors,

characterized by the following features:

— Each of the two EXCLUSIVE-OR blocks (1j, 2j) also includes a NOR gate (13j, 23j) one input of which is connected to the output of one of the AND gates (11j, 21j) of the EXCLUSIVE-OR block, while the other is connected to the output of the other AND gate (12j, 22j) of said block;

— the output of the first EXCLUSIVE-OR block (1j) of the jth stage (j) is coupled through an inverter (9j) to one of the two inputs of the second AND gate (22j) of the second EXCLUSIVE-OR block (2j), while in the ith stage (i), the output of the first EXCLUSIVE-OR block (1i) is coupled through a corresponding inverter (9i) to one of the two inputs of the first AND gate (21i) of the second EXCLUSIVE-OR block (2i);

— in the lowest-order stage (0), the carry input is replaced by an NAND block (40) combining the two digit signals (A0, B0);

— the two inputs of the first NOR block (7j) and of the second NOR block (8i) of the next lower-order stage (i) are fed with the corresponding digit signals (Aj, Bj, Ai, Bi), while the two inputs of the second NOR block (8j) and of the first NOR block (7i) of the next lower-order stage (i) are fed with the corresponding inverse digit signals ($\overline{Aj}$, $\overline{Bj}$, $\overline{Ai}$, $\overline{Bi}$);

— each stage (i) contains at least one series branch consisting of an additional inverter (4'i) and an additional transistor (3'i), the additional inverter in the lowest-order stage (0) being an additional NAND block;

— the n series branches are connected in series in the direction of increasing i;

— in each stage (9), the gate of the additional transistor (3'i) is connected to that of the transistor (3i) of the stage;

— in each stage (i), an additional first switching transistor (5'i) and an additional second, depletion-mode switching transistor (6'i) are connected, in the same direction as the first and second switching transistors (5i, 6i), between the additional transistor (3'i) and the input of the additional inverter (4'j) of the next higher-order stage (j), and

— the series connection of the series branches is such that only the end of the series combination serves as the output for the carry signal.

**Revendication**

Additionneur parallèle intégré monolithique à n étages, employant des transistors à effet de champ à enrichissement à grille isolée ayant le même type de conduction (canal P ou canal N), pour additionner deux nombres en code binaire naturel ayant n chiffres (n > 5), dans lequel le signal (Cj) de retenue du $j^{ième}$ rang (j = 0 ... n − 1) est transféré par mise en conduction d'un interrupteur constitué par un transistor opérant en commutateur électronique (3j) dont la voie de conduction commandée est connectée entre, d'une part, la sortie d'un inverseur (4j) qui fait suite à la sortie (aCi) de retenue de l'étage de rang immédiatement inférieur et, d'autre part, la sortie (aCj) de retenue du $j^{ième}$ étage, cet additionneur (binaire, parallèle, à retenue commutée, à circuit MOS) étant tel que, dans chaque étage (j):

— un premier organe de combinaison »OU exclusif« (1j) dont les entrées reçoivent les deux signaux de chiffres (Aj, Bj) et leurs inverses ($\overline{Aj}$, $\overline{Bj}$) fournit le signal de sortie commandant le commutateur électronique;

— un deuxième organe de combinaison »OU exclusif« (2j) dont les entrées reçoivent le signal de sortie du premier organe »OU exclusif« (1j) et le signal de retenue (Ci) de l'étage de rang immédiatement inférieur fournit un signal de sortie qui est le signal de somme du $j^{ième}$ étage;

— les deux organes de combinaison »OU exclusif« (1j, 2j) sont constitués chacun par un premier élément logique ET (11j, 21j) et par un deuxième élément logique ET (12j, 22j), les deux entrées du premier élément logique ET (11j) du premier organe de combinaison »OU exclusif« (1j) recevant les deux signaux de chiffres correspondants (Aj, Bj), et les deux entrées du deuxième élément logique ET (12j) recevant les inverses ($\overline{Aj}$, $\overline{Bj}$) de ces signaux de chiffres;

— la grille d'un premier transistor interrupteur (5j) est reliée à la sortie d'une première porte NI (7j), et la grille d'un deuxième transistor interrupteur (6j) est reliée à la sortie d'une deuxième porte NI (8j);

— la sortie de retenue (aCj) du $j^{ième}$ rang binaire est reliée, via la voie de conduction commandée du premier transistor interrupteur (5j), au premier pôle de la source de tension de fonctionnement et via la voie de conduction commandée du deuxième transistor interrupteur (6j) qui est du type à appauvrissement, au deuxième pôle de la source de tension de fonctionnement, le premier pôle étant, dans le cas de transistors à canal N, celui qui est au potentiel le plus négatif (−) et étant, dans le cas de transistors à canal P, celui qui est au potentiel le plus positif (+) des deux pôles;

cet additionneur étant caractérisé en ce que:

— les deux organes de combinaison »OU exclusif« (1j, 2j) comportent en outre chacun un élément logique NI (13j, 28j) dont la première entrée est reliée à la sortie du premier élément logique ET (11j, 21j) et dont la deuxième entrée est reliée à la sortie du deuxième élément logique ET (12j, 22j);

— la sortie du premier organe de combinaison »OU exclusif« (1j) du $j^{ième}$ étage (j) est reliée, par l'intermédiaire d'un inverseur (9j) à l'une des deux entrées du deuxième élément logique ET (22j) du deuxième organe de combinaison »OU exclusif« (2j), tandis que, dans le $j^{ième}$ étage (i), la sortie du premier organe de combinaison »OU exclusif« (1i) est reliée, via un inverseur correspondant (9i), à l'une des deux entrées du premier élément logique ET (21i) du deuxième organe de combinaison »OU exclusif« (2i);

— dans l'étage de rang le plus bas (0), l'entrée de retenue est remplacée par une porte NAND (40) opérant sur les deux signaux de chiffres (A0, B0);

— les deux entrées de la première porte NI (7j) et les deux entrées de la deuxième porte NI (8i) de l'étage de rang immédiatement inférieur (i) reçoivent les signaux de chiffres correspondants (Aj, Bj, Ai, Bi) tandis que les deux entrées de la deuxième porte NI (8j) et de la deuxième porte NI (7i) de l'étage de rang immédiatement inférieur (i) reçoivent les inverses ($\overline{Aj}$, $\overline{Bj}$; $\overline{Ai}$, $\overline{Bi}$) des signaux de chiffres correspondants;

— dans chaque étage (i), il est prévu au moins une branche série constituée d'un transistor supplémentaire (3'i) et d'un inverseur supplémentaire (4'i) qui, dans le cas de l'étage de rang le plus bas (0), est une porte NAND supplémentaire;

— les n branches séries sont elles-mêmes connectées en série dans le sens des i croissants;

— dans chaque étage (i), la grille du transistor supplémentaire (3'i) est reliée à celle du transistor (3i) de cet étage;

— dans chaque étage (i), il est prévu, entre le transistor supplémentaire (3'i) et l'entrée de l'inverseur supplémentaire (4'j) de l'étage de rang immédiatement supérieur (j), un autre premier transistor interrupteur (5'i) et un autre deuxième transistor interrupteur (6'i) du type à appauvrissement, agencés dans le même sens que le premier et le deuxième transistor interrupteur (5i, 6i);

— la connexion en série des branches séries est telle que l'extrémité de cette connexion en série est utilisée exclusivement comme sortie pour le signal de retenue.

FIG.1

FIG.2

$0 < j = i+1 < n-1$
$0 < i = j-1 < n-1$

0 048 352